# EUROPEAN PATENT SPECIFICATION

(11) **EP 4 505 128 B1**
(45) Date of publication and mention of the grant of the patent: **06.05.2026**
(21) Application number: 23716849.7
(22) Date of filing: 03.04.2023
(51) Int. Cl.: F28D 20/00

(54) **ENERGY STORAGE DEVICE AND METHOD FOR STORING ENERGY USING SERIALLY CONNECTED THERMAL ENERGY STORAGE UNITS**
ENERGIESPEICHERVORRICHTUNG UND VERFAHREN ZUM SPEICHERN VON ENERGIE UNTER VERWENDUNG SERIELL VERBUNDENER EINHEITEN ZUM SPEICHERN VON THERMISCHER ENERGIE
DISPOSITIF DE STOCKAGE D'ÉNERGIE ET PROCÉDÉ DE STOCKAGE D'ÉNERGIE AU MOYEN D'UNITÉS DE STOCKAGE D'ÉNERGIE THERMIQUE CONNECTÉES EN SÉRIE

(30) Priority: 05.04.2022 EP 22166689
(43) Date of publication of application: 12.02.2025
(73) Proprietor: E2S POWER AG, 5430 Wettingen (CH)
(72) Inventor: PANCHESHNYI, Sergey, 8051 Zurich (CH); NENADIC, Zoran, 11000 Belgrade (RS); SAVIC, Sasha, 5430 Wettingen (CH)
(74) Representative: Rutz, Andrea
(86) International application number: PCT/EP2023/058673
(87) International publication number: WO 2023/194305

(56) References cited:
- WO-A1-2020/254001
- CN-A- 114 041 036
- US-A1- 2021 172 685

## Description

### TECHNICAL FIELD

The present invention relates to an energy storage device comprising a plurality of thermal energy storage units of which at least two are connected in series. The invention also concerns a method for storing energy by means of such an energy storage device.

### PRIOR ART

For generating electricity, renewable sources such as wind and solar power are increasingly used. The problem, however, very often associated with renewable energy sources is the continuous availability of the generated electric power. For example, wind has an intermittent nature and is not blowing constantly for 24 hours and seven days a week. Solar energy is only available during daylight and is highly dependent on weather conditions, in particular the amount of clouds. Therefore, to make renewable energy sources more attractive and to increase the availability of the electric energy generated from such sources, energy needs to be stored. Today, there are different energy storage technologies available, ranging from batteries, pump storage systems, compressed air storages and various versions of energy storage using heat, either at high or at low end. By means of these energy storage technologies, energy is stored in the form of e.g. thermal energy, pressurized air or chemical energy in times when a surplus of the renewable source is available and is later converted into electric energy and used during times of high demand and/or low availability of the renewable source.

The main issues that today's energy storage systems are facing are their efficiency and their relatively low energy storage density (stored energy per unit of surface or volume).

Systems in which energy is stored based on compressed air are for example disclosed in WO 2004/072452 A1, DE 10 2011 112 280 A1, US 2012/0085087 A1, DE 44 10 440 A1, WO 2016/176174 A1 and CN 103353060 A.

In WO 2019/149623 A1 of the same applicant, an energy storage device is proposed in which thermal storage elements made of a solid material are arranged within a gas receptacle. The thermal storage elements can be heated up by means of an electrical heating device. Thus, the device allows the combined storage of both thermal energy and compressed gas. The stored compressed gas is already heated and, as a result, can directly be used to e.g. drive a gas turbine.

With regard to large-scale applications, molten salt energy storage systems are known which are based on the heating of liquid salt. In these systems, salt is heated during times of high energy availability and used during times, when energy is needed, to create heated steam for driving a steam turbine.

Most of the currently available energy storage systems for the generation of steam have the common drawback, that an intermediate medium is used for charging the thermal storage and/or for extracting heat for steam production. The intermediate medium (e.g. air, molten salt, etc.) is heated by an independent energy source and the heat accumulated in the storage is used for generating steam by means of a heat transfer process. Thus, the intermediate medium is heated by means of heat transfer from the thermal storage and then transfers the obtained thermal energy to the steam in a heat exchanger. These indirect processes for transferring the energy from the storage device to the steam provide additional parasitic losses and significantly reduce system efficiency. Moreover, the additional equipment needed for circulating the intermediate medium makes the system complicated and less robust.

Recently, energy storage devices have been proposed which use solid storage materials in the form of stones or concrete, in order to store thermal energy. The stored thermal energy can be used in times of high demand to generate steam for heating or for driving a steam power plant, in order to convert the stored thermal energy back to electric energy.

In several publications, solid materials such as graphite (WO 2005/088218 A1; US 4,136,276 A), metals (iron - EP 1 666 828 A2, steel - WO 91/14906 A1) or MGA (WO 2014/063191 A1) are proposed as storage materials. In several publications, it is suggested to heat the solid storage materials by electric resistive heaters (WO 2005/088218 A1, WO 91/14906 A1 and WO 2012/038620 A1) or by induction (US 4,136,276 A).

For generating steam based on the stored thermal energy, it is proposed in WO 2005/088218 A1 to provide pipes, in order to guide water along the storage material. In the device as disclosed by EP 1 666 828 A2, a conduit is provided within the metallic storage material. In WO 91/14906 A1, separate blocks with baffle plates are used. The difficulty with pipes is the thermal contact resistance between the pipes and the storage material, which may require an overheating of the storage material, in order to achieve the required steam parameters. The provision of a conduit formed by the storage material itself is only applicable with metallic storage materials that have a moderate thermal capacity. The blocks with baffle plates lead to an excessive overall size of the entire system, in order to ensure steam with the required amount and parameters.

The control of the steam parameters is a particular challenge, which is only addressed in some publications, such as in WO 2005/088218 A1. The typically proposed solutions, however, often require expensive equipment, such as hot valves, i.e. valves that regulate the flow of the hot steam.

In WO 2020/254001 A1 of the same applicant, the problem of controlling the temperature of the generated steam is addressed by proposing an energy storage device, which allows a temperature stratification to evolve within the solid material of a single thermal storage element or over a plurality of thermal storage elements that are connected to each other in series. Due to the temperature stratification, there is a pronounced temperature gradient from the input towards the output of the thermal storage element(s). The temperature at the output, which corresponds to a predetermined goal temperature, changes the least over time and, consequently, can be used to control the steam temperature.

US 2021/0172685 A1 discloses a thermal energy storage device with several blocks connected in parallel or in series. Bypass valves are provided, in order to adjust the flow through each block.

### SUMMARY OF THE INVENTION

It is an object of the present invention to provide an energy storage device for storing energy, which is efficient and allows control of steam temperature in a broad range of charging states. Furthermore, the energy storage device should be easily usable with existing power plants, in particular with fossil-fuel power plants fired by e.g. gas, oil and/or coal.

This object is solved by the energy storage device as claimed in claim 1. A method for storing energy by means of such an energy storage device is claimed in claim 10. Further embodiments of the device and of the method are provided in the dependent claims.

Thus, according to the current invention, an energy storage device is provided comprising a plurality of thermal energy storage units, which each comprise
a thermal storage element made of a solid material, for storing thermal energy;
an electrical heating device for heating the thermal storage element by means of electric energy; and
a conduit which is adapted to guide a fluid through or along the thermal storage element, in order to transfer thermal energy from the thermal storage element to the fluid;
wherein at least two thermal energy storage units of the plurality of thermal energy storage units are connected in series, such that the fluid can be guided serially through the conduits of these serially connected thermal energy storage units.

A bypass conduit is provided which allows the fluid to bypass at least one thermal energy storage unit of the at least two serially connected thermal energy storage units.

The electrical heating device comprises a ceramic tube with a main longitudinal center axis and an electric wire, which is spirally wound around the main longitudinal center axis inside or outside of the ceramic tube. It has turned out that such a design of the electrical heating device is particularly well suited to achieve high heating rates while keeping the resulting electric fields under control and avoiding short circuits.

The provision of a plurality of thermal energy storage units brings about the advantage that the energy storage device is scalable to the needs of a user, i.e. by applying a respective number of thermal energy storage units. In such an energy storage device with a plurality of thermal energy storage units, efficiency of thermal storage and control of the fluid temperature can be significantly improved by the provision of the bypass conduit as indicated: By having a bypass conduit which allows, if required, the fluid to bypass at least one of the serially connected thermal energy storage units, both a high efficiency of the energy storage and a good control of the fluid temperature can be achieved over a broad range of charging states. Due to the bypass conduit, a comparatively large number of thermal energy storage units can be used, when the charging state is high, i.e. when the amount of stored thermal energy is high, and a comparatively small number of thermal energy storage units can be used, when the charging state is low, i.e. when the amount of stored thermal energy is low.

Thus, the energy storage device is preferably configured such that, depending on the charging state of one or more of the individual thermal storage elements, the fluid is guided through the bypass conduit or not. One or more manually or automatically operable valves are preferably provided for this purpose.

In contrast, energy storage devices according to the state-of-the-art that do not allow to adapt the number of thermal energy storage units to the charging state, have the problem that with high charging states, the temperature of the storage material can become too high, such that the temperature of the fluid exceeds the required temperature. On the other hand, with low charging states, the temperature of the storage material can become too low, such that the fluid does not reach the required temperature anymore. By means of the provision of the bypass in the inventive energy storage device, this problem is addressed in that the capacity of thermal energy storage is dynamically adaptable to the charging state of the device.

A serial connection of a least two thermal energy storage units means that the fluid, which is to be heated by the thermal storage elements, can be guided serially through the conduits of these thermal energy storage units. Thus, the fluid passes through the serially connected thermal energy storage units one after the other. By means of the bypass, one or more of these serially connected thermal energy storage units can be bypassed, or, in other words, left out, by the fluid.

An individual thermal energy storage unit thus comprises at least three components, which are the thermal storage element, the electrical heating device and the conduit. Of course, it is also conceivable that an individual thermal energy storage unit comprises more than one thermal storage element, more than one electrical heating device and/or more than one conduit. The plurality of thermal energy storage units do not necessarily be physically separate from each other. Instead, one or more of the above-mentioned components of two or more thermal energy storage devices may well be formed from the same constructive part. E.g. the same tube that forms the conduit of a first thermal energy storage unit can also form the conduit of a second thermal energy storage unit. In this case, the conduits of the first and the second thermal energy storage unit are formed by different segments of the tube. The thermal storage elements of different thermal energy storage units are preferably designed such that they can be heated to different temperatures and are also able to store the thermal energy at different temperature levels.

The bypass conduit preferably comprises a single valve or a plurality of valves, which allow the one or more serially connected thermal energy storage units to be set in and out of operation, as required. In this context, a thermal energy storage unit is considered to be in operation, if the fluid streams through the thermal energy storage unit (and possibly through further serially connected thermal energy storage units) so that thermal energy is transferred from the thermal storage element of the respective thermal energy storage unit to the fluid.

The serial connection of at least two thermal energy storage units brings about the advantage that a stratified temperature distribution can be achieved across the multiple thermal energy storage units. Thus, the thermal storage elements of the individual serially connected thermal energy storage units can have different temperatures, preferably with a continuous decrease or increase, advantageously a decrease, in temperature from the most upstream thermal energy storage unit to the most downstream thermal energy storage units. The most downstream thermal energy storage unit then preferably serves to fine-adjust, i.e. control, the fluid output temperature. A particularly efficient control of the fluid output temperature can be achieved in this way.

The electrical heating device preferably comprises a resistive heater that is arranged near or adjacent to the thermal storage element. Thus, in this case, the thermal storage element is indirectly heated by the electrical heating device, meaning that the heat is transferred by thermal conduction and/or convection and/or radiation from the electrical heating device to the thermal storage element. The resistive heater is preferably made of a metallic material, but can also be made from a semi-conducting ceramics or an organic material.

An electric insulation is preferably provided, in order to electrically insulate the electrical heating device from the thermal storage element in each of the thermal energy storage units. The electric insulation serves to electrically separate the electrical heating device from the thermal storage element, i.e. to prevent short circuits in the thermal storage element, in particular if the thermal storage element has a certain electric conductivity. The electric insulation can particularly be in the form of a gas insulation.

Due to a certain electric conductivity of the thermal storage elements, the electric insulation can be necessary. The electric insulation should not only protect the respective thermal storage element from short circuits, but at the same time should also have a good thermal conductivity to ensure charging efficiency. These contradictory and therefore challenging requirements can be met by providing the electric insulation in the form of a gas insulation. Preferred gases are air, nitrogen, argon, CO₂ and others traditionally used for electrical insulation purposes.

In the context of the present document, the process of heating of one or more thermal storage elements by means of the electrical heating device is referred to as the charging process.

The electrical heating device of each of the thermal energy storage units preferably comprises a resistive heater in the form of for example a resistive wire or resistive stripe, i.e. an electrically resistive element having a flat configuration. In the case of a resistive wire, the wire can be wound around a ceramic holder. In the case of a resistive stripe, in order to spatially adapt the heat transfer to the respective thermal storage element during the charging process, the resistive stripe can have a varying cross-sectional area and/or a varying surface coverage along a surface of the thermal storage element. Alternatively or in addition, the cross-sectional area and/or a surface coverage can also vary along of the longitudinal direction of the resistive stripe. The embodiment of the resistive stripe with varying cross-sectional area and/or varying surface coverage is particularly advantageous, if the thermal storage element usually exhibits a certain temperature stratification caused by the discharging process.

In certain embodiments, it is also possible that the electrical heating devices comprise a resistive rod or tube that is inserted in a hole provided in the respective thermal storage element. In the space surrounding the rod or tube, the hole is in this case preferably filled with an electric insulation material, which can particularly be an insulating gas. The hole is preferably a through-hole, but can also be a blind hole.

In other embodiments, the electrical heating device of each of the thermal energy storage units can be adapted to heat the thermal storage element by means of generating an electric current within the solid material of the thermal storage element.

The heating of the thermal storage element by means of an electric current generated within the solid material of the thermal storage element allows a very direct charging process of the energy storage device, which can be particularly efficient. It means that the thermal energy is directly generated by the thermal storage element itself, i.e. by converting the electric current into thermal energy due to resistance or inductive heating of the solid material. Thus, the thermal storage element in this case has a certain electric conductivity for this purpose. As a consequence, no transfer of thermal energy with possible associated losses from a heating element to the thermal storage element is taking place. No intermediate media is required for heating the thermal storage element by means of the electrical heating device. Moreover, no electric insulation between the electrical heating device and the respective thermal storage element is needed as in energy storage devices in which the thermal storage element is heated by indirect electrical resistive heating with heat dissipation.

The heating of the thermal storage element by means of an electric current generated directly in the solid material is particularly well suited in thermal storage elements that have a preferred electric resistivity of at least 10⁻⁴ Ωm and not more than 1 Ωm. In this case, the solid material of the thermal storage element is electrically conductive, but has sufficient resistance to be heated directly using a DC- or AC-voltage. Materials with the preferred electrical resistivity as indicated are rare in nature.

For generating the electric current within the solid material of the thermal storage elements, the electrical heating device of each of the thermal energy storage units can, in a preferred embodiment, comprise contact electrodes that are attached to the thermal storage element. The electrical heating devices in this case are adapted to apply a voltage difference between at least two contact electrodes, in order to generate an electric current through the solid material of the respective thermal storage element from at least one contact electrode to at least another contact electrode. With such an embodiment, a very direct and, thus, efficient heating of the thermal storage element can be achieved. The contact electrodes are preferably attached directly to the solid material of the thermal storage element. By having electrical heating devices with contact electrodes that are directly attached to the respective thermal storage elements, it is also possibly apply direct current or alternate current for the charging process. Thus, no frequency converter is required. Furthermore, in comparison to the use of an induction coil, no cooling device is needed for cooling the inductor, which is also associated with thermal losses.

In another possible embodiment, the electrical heating devices of the thermal energy storage units can comprise an induction coil for inducing the electric current within the respective thermal storage elements. The induction coil in this case serves to induce an electric current within the solid material of the thermal storage element by means of electromagnetic induction. The use of an induction coil which usually comprises several windings not only allows a direct generation of an electric current within the solid material of the thermal storage element, but also allows a simple production of the energy storage device in many embodiments. Thus, inductive heating improves the charging efficiency, because it is a fast and direct process.

The conduit of each of thermal energy storage unit preferably extends along or through the thermal storage element. The fluid, which is guided by the conduit can in particular be water and/or steam. Preferably, the fluid is water, which is converted to steam, in particular superheated steam, by the transfer of the thermal energy. The material forming the conduit is preferably electrically grounded in each case. In the context of the present document, the transfer of thermal energy from the thermal storage element of one or more of the thermal energy storage units to the fluid is referred to as the discharging process.

The conduits of the thermal energy storage units, which serves to guide the fluid can be laterally closed or open. The conduits usually have an inlet and an outlet arranged at the respective ends of the conduit. If the conduit is laterally closed, the inlet and the outlet are the only access to the conduit. Thus, the conduit is circumferentially surrounded by a delimiting material and can form e.g. a circular cross-section. In certain embodiments, the conduit, which can also be referred to as a tubing, can be formed, i.e. delimited, by the material of the thermal storage element. Alternatively, the conduits can also be provided in steam generation blocks and be delimited by the material of the steam generation blocks. The steam generation blocks are preferably adapted to be arranged directly adjacent to a thermal storage element in each case and preferably each have an overall cuboid, in particular plate-like configuration. It is also possible that a pipe or a tube is provided that delimits the conduit. Even if not preferred in all embodiments, it is generally conceivable that the pipe or tube extends through the thermal storage element or the steam generation block.

Similarly as the charging process, the discharging of the energy storage device can be carried out in a particularly efficient way: The fluid which is used for e.g. driving a turbine can be guided directly through the conduits or tubings of one or more of the thermal energy storage units, in order to be heated up. By means of the turbine, the stored thermal energy can for example be converted into mechanical work and back into electric energy. In this process, preferably no intermediate medium is used for transferring the thermal energy from the thermal storage element to the medium that drives the turbine. The medium that drives the turbine is preferably the fluid which is guided through the conduit(s) of one or more of the thermal energy storage units.

A further advantage of the energy storage device as indicated is the use of a solid material for the storage of thermal energy. Solid materials usually allow the storage of large amounts of thermal energy within a comparatively small space. Thus, the use of a solid material for the storage of thermal energy enables the energy storage device to be designed in a particularly compact way.

The thermal storage element is in each case an element that is particularly designed for the purpose of storing thermal energy. Thus, the storage of thermal energy is usually the main and preferably only purpose of the thermal storage element.

If the conduit extends through the thermal storage element, it is preferably completely surrounded by the solid material of one or several thermal storage elements (e.g. if more than one thermal energy storage units are present) along a major part of its entire longitudinal extension. The conduit is completely surrounded along preferably at least 60%, more preferably at least 80% of its longitudinal length by the solid material of one or several thermal storage elements.

The fluid is preferably water and/or steam. The use of water and/or steam as the fluid is particularly safe and allows to directly drive a steam turbine.

In a particularly preferred embodiment, the fluid entering the energy storage device and in particular at least one of the thermal energy storage units is water in its liquid phase and the fluid exiting the energy storage device and in particular at least one of the thermal energy storage units is water in its gaseous phase, i.e. steam. Thus, the energy storage device is preferably adapted to boil water and more preferably to boil water and to further heat the obtained steam. In other words, fluid in the form of liquid water preferably enters the energy storage device and in particular at least one of the thermal energy storage units and fluid in the form of superheated steam preferably leaves the energy storage device. Such an embodiment of the energy storage device is particularly well suited in combination with a steam turbine for converting the stored thermal energy into mechanical energy, which can be further converted into electrical energy.

In another also preferred embodiment, the fluid entering the energy storage device and in particular at least one of the thermal energy storage units is water in its gaseous phase, i.e. steam, and the fluid exiting the energy storage device and in particular at least one of the thermal energy storage units is also water in its gaseous phase, i.e. steam. Thus, the energy storage device is in this case preferably adapted to further heat the input steam. In other words, steam enters the energy storage device and in particular at least one of the thermal energy storage units and steam at an increased temperature, i.e. superheated steam, preferably leaves the energy storage device. Also this embodiment of the energy storage device is well suited in combination with a steam turbine for converting the stored thermal energy into mechanical energy, which can be further converted into electrical energy.

The thermal storage element of each thermal energy storage unit preferably comprises at least one flat surface, such that the thermal storage elements of different thermal energy storage units are adapted to abut each other with their respective flat surfaces. The thermal storage elements can particularly have an overall cuboid, in particular plate-like shape. The abutment of the plurality of thermal storage elements does not necessarily be direct, but can also be indirect, e.g. with an electrical heating element and/or a steam generation block arranged in-between. In order to be adapted to be arranged between the flat surfaces of at least two adjacent thermal storage elements, the electrical heating device and/or the steam generation block have an overall flat configuration. A modular and easily scalable configuration of the energy storage device can be achieved in this way.

In one embodiment, each of the one or several thermal energy storage units has an overall tube-like shape, with a central tube forming the conduit and with the thermal storage element surrounding the tube concentrically. With such a design, the at least one thermal energy storage unit can easily be produced and can be arranged on-site in a particularly space-saving manner in many cases.

In another, particularly preferred embodiment, each of the thermal storage elements has an overall cuboid shape and each electrical heating device has an overall flat configuration. In this embodiment, steam generation blocks are additionally provided which each have an overall cuboid configuration and comprise a conduit for guiding a fluid. The electrical heating devices of this embodiment are adapted to be arranged between the thermal storage elements, and the steam generation blocks are adapted to be arranged between the thermal storage elements, such that the energy storage device can be modularly designed with an arbitrary number of thermal storage elements, electrical heating devices and steam generation blocks. Due to the modularity of this design, the energy storage device can be easily adapted to the present needs, in particular with regard to the thermal storage capacity.

In certain embodiments, in all or some thermal energy storage units, the conduits can extend through the respective thermal storage element. The conduit can particularly extend such through a respective thermal storage element, that the temperature distribution remains essentially homogeneous within the entire thermal storage element during the transfer of thermal energy from the thermal storage element to the fluid. This can be achieved for example, if the at least one thermal energy storage unit is a multi-pass thermal energy storage unit. A multi-pass thermal energy storage unit is a thermal energy storage unit in which the conduit does not extend in a straight line through the thermal storage element, but instead comprises at least one turn, meander, curve etc. such that at least one part of the solid material is able to transfer thermal energy to at least two different adjacent sections of the conduit during the discharge process. A multi-pass thermal energy storage unit has the advantage that the distribution of temperature within the thermal storage element remains more homogeneous during the discharge process. A more homogeneous temperature distribution means less thermal stresses and, as a result, a prolonged lifetime of the thermal storage element. In a multi-pass thermal energy storage unit, the conduit preferably has the form of a two- or three-dimensional, one- bi- or more-filar meander, spiral or snail.

In all or some of the thermal energy storage units, the conduit can also extend such through the respective thermal storage element, that a temperature stratification between an inlet and an outlet of the conduit evolves during the transfer of thermal energy from the thermal storage element to the fluid. The temperature stratification is preferably such that the temperature of the thermal storage element continuously increases along a direction from the inlet to the outlet of the conduit. Such a temperature stratification can be achieved for example, if the at least one thermal energy storage unit is a single-pass thermal energy storage unit. A single-pass thermal energy storage unit is a thermal energy storage unit in which the conduit extends in essentially a single straight line through the thermal storage element, such that each part of the solid material is able to transfer thermal energy to only one adjacent section of the conduit during the discharge process. As a result, the distribution of the temperature within the solid material of the thermal storage element during the discharge process is not homogeneous. In the region of the outlet of the conduit, the thermal storage element usually has a higher temperature than in the region of the inlet of the conduit, i.e. there is a pronounced temperature gradient within the thermal storage element. Any thermal energy storage unit with temperature stratification including the single-pass thermal energy storage unit is particularly well suited for controlling the temperature of the fluid at the outlet of the conduit.

Preferably, at least one of the serially connected thermal energy storage units is a thermal energy storage unit with stratified temperature distribution, such as e.g. a single-pass energy storage unit. The thermal energy storage unit with stratified temperature distribution is advantageously arranged downstream of at least one further serially connected thermal energy storage unit. The at least one further serially connected thermal energy storage unit can be a thermal energy storage unit with homogeneous or stratified temperature distribution, such as e.g. a single- or multi-pass thermal energy storage unit. In this way, the fluid output temperature can be controlled particularly efficiently.

The energy storage device can additionally comprise a turbine for converting, by means of the heated fluid, the thermal energy stored in the thermal energy storage units into electric energy. The turbine is preferably a steam turbine, but can also be e.g. a gas turbine. In the case of a steam turbine, the fluid is preferably water. In the case of a gas turbine, the fluid is preferably air.

Preferably, at least one thermal energy storage unit of the at least two serially connected thermal energy storage units which is allowed to be bypassed by the fluid by means of the bypass conduit is arranged upstream of at least another thermal energy storage unit of the at least two serially connected thermal energy storage units. It is in particular possible that the thermal energy storage unit which is arranged the most downstream of the serially connected thermal energy storage units cannot be bypassed by the fluid using the bypass. Preferably, the bypass conduit allows bypassing all thermal energy storage units of the serially connected thermal energy storage units, either each individually or a plurality of them in combination, except the one which is positioned the most downstream. The provision of such a bypassing-possibility allows adapting the charging capacity of the thermal energy storage unit in a particularly flexible way.

Preferably, at least one thermal energy storage unit of the plurality of thermal energy storage units is connected in parallel to at least one thermal energy storage unit of the at least two serially connected thermal energy storage units. The additional at least one thermal energy storage unit which is connected in parallel can be a thermal energy storage unit with homogeneous or stratified temperature distribution, such as e.g. a single- or multi-pass thermal energy storage unit. The parallel arrangement of a thermal energy storage unit allows a regulation of the parallel fluid streams by means of e.g. pumps and/or valves, in order to obtain the desired fluid temperature after mixing the two fluid streams. Thus, an improved control of the final fluid output temperature is possible in this way.

The arrangements of the thermal energy storage units in series and in parallel, as described above, can of course be combined arbitrarily with each other, in order to achieve a particularly well adjustable, precise and/or stable temperature control of the fluid during the discharge process. The temperatures of the thermal storage elements which are arranged in series or in parallel, preferably differ by at least 50°C and even more preferably by at least 100°C.

The energy storage device can comprise three serially connected thermal energy storage units, which can be bypassed by means of the bypass conduit in such a way that both one and two thermal energy storage units can be bypassed as required. The energy storage device can also comprise four serially connected thermal energy storage units, which can be bypassed by means of the bypass conduit in such a way that both one, two and three thermal energy storage units can be bypassed as required. Having three or four serially connected thermal energy storage units in combination with the bypassing options as indicated has turned out to be an optimal trade-off with regard to the complexity and the adaptability of the energy storage device in most practical situations.

In a particularly preferred embodiment, the energy storage device additionally comprises a heat exchanger, which is arranged serially downstream of the at least two serially connected thermal energy storage units. The heat exchanger can serve to heat up or, what is preferred, to cool the fluid that is output from the at least two serially connected thermal energy storage units. The heat exchanger can particularly serve for avoiding an overshoot of the outlet temperature of the fluid before leaving the energy storage device. Alternatively or additionally, the heat exchanger can also serve to use the thermal energy for secondary purposes, e.g. when the outlet temperature of the fluid is below a required level, such as e.g. 550°C as used in many steam turbine applications. For example, another fluid circulating in a secondary open or closed circuit can be heated by means of the heat exchanger and be used, for example, for cogeneration, such as to provide onsite power to an electrical and domestic hot water system.

The heat exchanger can particularly be adapted to cool the fluid that is output from the at least two serially connected thermal energy storage units by means of all or at least a part of the fluid that is input to the at least two serially connected thermal energy storage units. Thus, in this case, before the fluid is input into the serially connected thermal energy storage time, to cool the fluid that is output from the serially connected thermal energy storage units. The provision of such a feedback-loop enables a particularly efficient control of the resulting fluid output temperature. In other embodiments, the secondary fluid circuit can also be completely separate from the one of the fluid that is guided through the serially connected thermal energy storage units.

According to a further development of the invention, the energy storage device additionally comprises a fluid tank for storing heated or partially heated fluid that is output from one of the plurality of thermal energy storage units, in particular from one of the serially connected thermal energy storage units. The fluid stored in the fluid tank can be used for cogeneration and/or can be input to at least one of the plurality of thermal energy storage units. In this way, it is e.g. possible to use preheated fluid from a previous process, in order to start-up the energy storage device. Preheated fluid from the fluid tank can also be used to preheat the thermal storage element of a further serially connected thermal energy storage unit before the further thermal energy storage unit is put into operation, i.e. not bypassed anymore.

In a particularly preferred embodiment, the energy storage device additionally comprises a heat transfer material, which is arranged between the conduit and the thermal storage element of one or more of the plurality of thermal energy units. The heat transfer material, which can be in the form of a paste, a powder or a gel at least during production of the energy storage device, is adapted to dimensionally compensate for differential thermal expansions of the conduit and the thermal storage element. In order to dimensionally compensate for the different expansions of the conduit and the thermal storage element, the heat transfer material preferably has a certain flexibility and advantageously has a negative thermal expansion coefficient.

In order to avoid abrupt transitions of the electric fields at the ends of the ceramic tube, preferably a field shield partially or completely surrounding the ceramic tube is provided in the region of each end of the spirally wound electric wire. The field shields preferably each have a toroidal shape and low surface roughness, i.e. the fields shields are preferably be polished.

The invention is also directed to a method for storing energy by means of an energy storage device, in particular by means of an energy storage device as indicated above, with a plurality of thermal energy storage units each comprising a thermal storage element made of a solid material, an electrical heating device and a conduit which is adapted to guide a fluid through or along the thermal storage element, wherein at least a first thermal energy storage unit and a second thermal energy storage unit of the plurality of thermal energy storage units are connected in series, and wherein each electrical heating device comprises a ceramic tube with a main longitudinal center axis and an electric wire, which is spirally wound around the main longitudinal center axis inside or outside of the ceramic tube. The method comprises the steps of
- heating the thermal storage element of the second thermal energy storage unit by means of electric energy; and
- guiding a fluid through the conduit of the second thermal energy storage unit, in order to transfer thermal energy from the thermal storage element of the second thermal energy storage unit to the fluid, while bypassing the first thermal energy storage unit using a bypass conduit.

If required, the first thermal energy storage unit is also set in operation by guiding the fluid also through the first thermal energy storage unit. The conduit, which can also be referred to as a tubing, can particularly extend along or through the thermal storage element. The heated fluid is preferably used to drive a turbine, in particular a steam turbine. The second thermal energy storage unit is preferably arranged downstream of the first thermal energy storage unit.

In a preferred embodiment of the method, the second thermal energy storage unit is heated to a different temperature than the first thermal energy storage unit by means of the respective electrical heating devices. The temperature of the second thermal energy storage unit preferably corresponds to a predetermined goal temperature of the fluid. The predetermined goal temperature thus is usually the temperature of the fluid when leaving the most downstream thermal energy storage unit of the at least two thermal energy storage units that are arranged in series. Preferably, the predetermined goal temperature is the temperature of the fluid when leaving the energy storage device and is in particular preferably the temperature of the fluid when entering a turbine. Thus, the predetermined goal temperature can also be referred to as the fluid output temperature of the energy storage device. The control of mass flow and pressure is preferably provided by one or several pumps and/or by one or several valves arranged on the cold end of the system, i.e. upstream of the serially connected thermal energy storage units. The system preferably does not include any pumps and/or valves at the hot end.

Preferably, the predetermined goal temperature of the fluid is in the range of 400°C to 700°C, more preferred in the range between 500°C and 600°C, in particular at approximately 550°C.

The method preferably comprises the step of
- heating the thermal storage element of the first thermal energy storage unit by means of electric energy, after the thermal storage element of the second thermal energy storage unit has reached a certain, preferably predefined, temperature; and
- closing, e.g. by means of one or several valves, the bypass conduit and guiding the fluid serially through the conduits of the first and the second thermal energy storage units.

In a preferred embodiment, the energy storage device additionally comprises a heat exchanger, which is arranged serially downstream of the second thermal energy storage unit, and the method further comprises the step of
- cooling the fluid that is output from the second thermal energy storage unit by means of the heat exchanger, when the thermal storage element of the second thermal energy storage unit exceeds a certain temperature.

In this way, the output temperature of the fluid can be controlled particularly efficiently.

### BRIEF DESCRIPTION OF THE DRAWINGS

Preferred embodiments of the invention are described in the following with reference to the drawings, which are for the purpose of illustrating the present preferred embodiments of the invention and not for the purpose of limiting the same. In the drawings,
- Fig. 1: shows a schematic perspective view of the thermal storage element and of the electrical heating device of an energy storage device according to an inventive embodiment, the electrical heating device comprising a resistive heater that extends through the thermal storage element;
- Fig. 2a: shows a schematic cross-sectional view along the length of the thermal storage element and of the conduit of an energy storage device according to an inventive embodiment, with the conduit extending through the thermal storage element;
- Fig. 2b: shows a cross-sectional view in the plane II-II of the thermal storage unit and the conduit of Fig. 2a;
- Fig. 3: shows a schematic perspective view of a thermal energy storage unit according to another embodiment of an inventive energy storage device, with an electrical heating device arranged between two thermal storage elements;
- Fig. 4: shows a schematic perspective view of an inventive energy storage device having a modular configuration with a plurality of stacked thermal storage elements, electrical heating devices and steam generation blocks;
- Fig. 5: a schematic view of an energy storage device, comprising three single-pass thermal energy storage units arranged in series;
- Fig. 6: a graph illustrating the variation of storage temperature along the principal heat propagation direction of the thermal storage element and over time, in case of a thermal storage element with temperature stratification;
- Fig. 7: a perspective view of a (multi-pass) thermal energy storage unit of an energy storage device, with straight conduits extending through the thermal storage element, the conduits being connected by connection elements to form two serpentine conduits;
- Fig. 8: a graph illustrating the variation of storage temperature along the principal heat propagation direction of the thermal storage element and over time, in case of a thermal storage element with homogeneous temperature distribution;
- Fig. 9: a schematic view of an energy storage device, comprising a multi- and a single-pass thermal energy storage unit arranged in series;
- Fig. 10: a schematic view of an energy storage device, comprising a multi and a single-pass thermal energy storage unit arranged in parallel;
- Fig. 11: a schematic view of an energy storage device according to an inventive embodiment;
- Fig. 12: a schematic view of an energy storage device according to another inventive embodiment, with a heat exchanger used for cooling the input fluid;
- Fig. 13: a schematic view of an energy storage device according to another inventive embodiment, with a heat exchanger used for cooling or heating a fluid in a separate circuit;
- Fig. 14: a schematic partial view of an energy storage device according to another inventive embodiment, with a fluid tank for storing partially or fully heated fluid; and
- Fig. 15: a perspective view of a heating device used in an inventive embodiment of energy storage device.

### DESCRIPTION OF PREFERRED EMBODIMENTS

In the following, features having the same or a similar design and/or the same or a similar function are referred to by means of the same reference numerals.

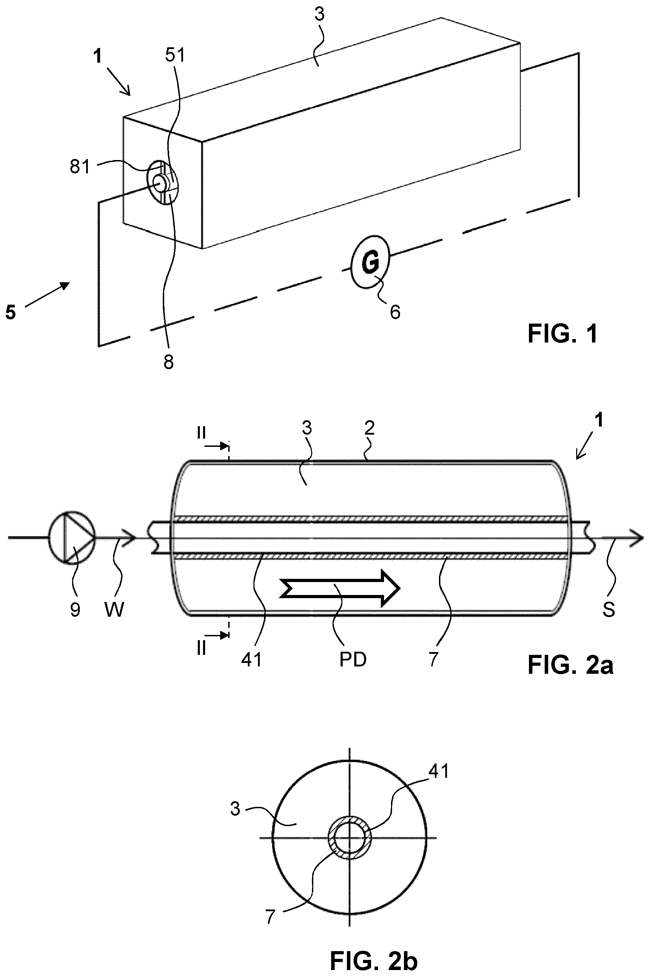

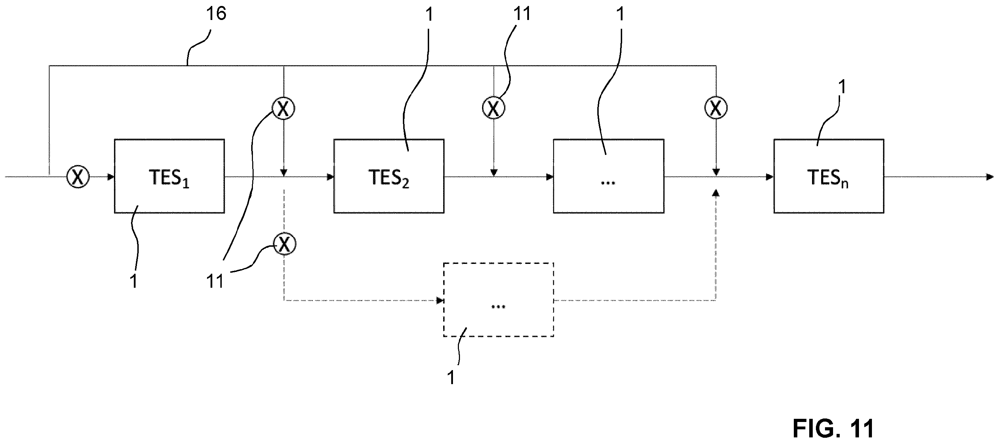

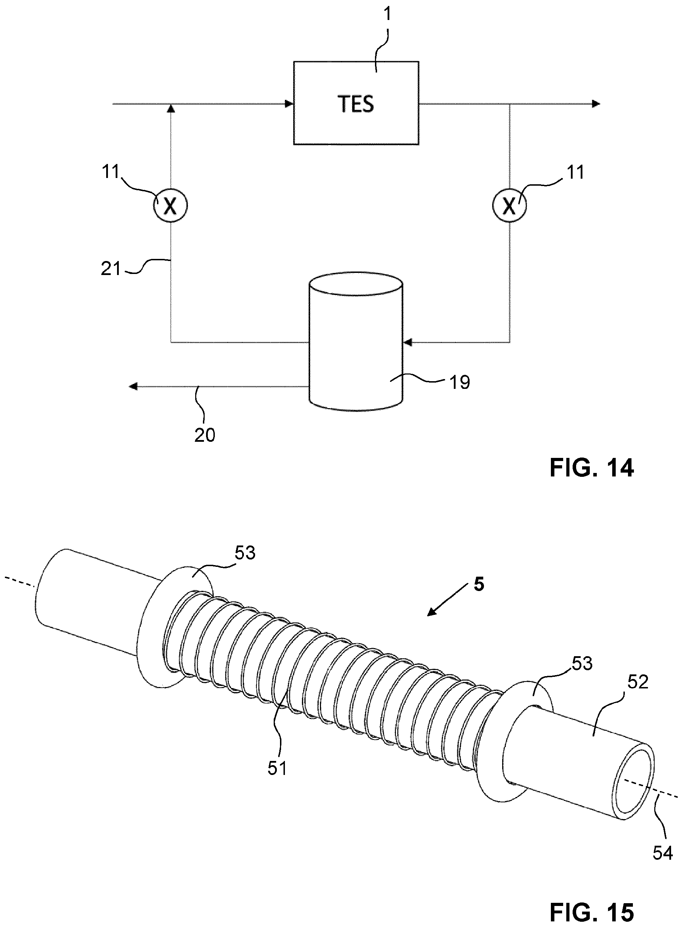

The inventive energy storage device comprises a plurality of thermal energy storage units which each comprise a thermal storage element, an electrical heating device and a conduit. In the following, possible designs and the functioning of these individual parts of the energy storage device and of a single thermal energy storage unit in particular are explained on the basis of figures 1 to 10. The arrangement of a plurality of such thermal energy storage units to form an inventive energy storage device is shown based on figures 11 to 14. A particular embodiment of an electrical heating device adapted to be used as part of one or several thermal energy storage units of an inventive energy storage device is explained based on figure 15.

An embodiment of a thermal energy storage unit 1 as it can be used in an inventive energy storage device is shown in figure 1. A conduit used for discharging the thermal energy storage unit 1 is present, but not shown in figure 1. The thermal energy storage unit 1 comprises a thermal storage element 3 which here has a cuboid shape with a central through-hole extending along a straight line on the longitudinal centre axis through the entire thermal storage element 3. Arranged within the through-hole is a resistive heater 51 of an electrical heating device 5. The electrical heating device 5 serves to charge the thermal energy storage unit 1, i.e. to heat up its thermal storage element 3 during times of high energy availability. In order to prevent possible short circuits within the solid material of the thermal storage element 3, an electric insulation 8 in the form of a gas insulation is provided that surrounds the resistive heater 51 along of its entire length. In addition to the gas insulation, the electric insulation 8 can also comprise one or several layers of solid insulation. The material of the thermal storage element 3 has a preferred electric resistivity of less than 10⁻⁴ Ωm. In order to hold the resistive heater 51 centered within the through-hole of the thermal storage element 3, spacers 81 made from a dielectric material are provided.

Thus, in the embodiment of figure 1, the space between the resistive heater 51 and the material of the thermal storage element 3 is filled by an electric insulation 8, which can be realized by a non-conductive gas (air, nitrogen, argon, or CO₂ etc.). The electric current (AC or DC) heats the resistive heater 51 and by radiation the heat is transferred to the inner surface of the thermal storage element 3 and then by conduction to the inside of the solid material of the thermal storage element 3. In the present embodiment, the resistive heater 51 has a circular cross-section. The electrical heating device 5 is connected to an electric energy supply 6 (source of electric current G), which can for example be a solar or wind power system and/or the public electric power supply.

Figures 2a and 2b show the discharging part of a thermal energy storage unit 1 as it can be used in an inventive energy storage device. The charging part, i.e. the electrical heating device 5, of the thermal energy storage unit 1 is not shown here, but can e.g. be designed as shown in figure 1. A thermally insulated housing 2 is provided, which serves to receive and hold the thermal storage element 3. The thermal energy storage unit 1 shown in figures 2a and 2b is a single-pass thermal energy storage unit 1 having an overall tube-like shape is used. The production of single-pass thermal energy storage units 1 in a tube-like shape has turned out to be particularly easy and, thus, cost-saving. Moreover, single-pass thermal energy storage units 1 with such a shape can be arranged in a space-saving manner in many practical situations.

As can be seen from figure 2a, the conduit 41 extends along an essentially straight line through the thermal storage element 3. Or in other words, the conduit 41 extends centrally and in parallel to the longitudinal center axis of the thermal storage element 3 through the latter. As a consequence, the temperature distribution within thermal storage element 3 during the discharging process becomes inhomogeneous, i.e. there is a significant gradient of the temperature, i.e. a temperature stratification, in the thermal storage element 3 from the inlet to the outlet of the conduit 41. Such an inhomogeneous temperature distribution (or temperature stratification), which leads to a heat propagation along a principal heat propagation direction PD during the discharging process, can be advantageous, in order to maintain a constant temperature of the steam S at the outlet of the conduit 41.

The energy storage device as shown in figures 2a and 2b also comprises a heat transfer material 7 for electrically insulate the conduit 41, which is preferably a metallic conduit, i.e. a conduit formed by a metallic material, in all embodiments, from the thermal storage element 3. The heat transfer material 7 serves to prevent a bypass current within the conduit 41 during the charging process. The heat transfer material 7 is preferably represented by a thin layer of an electrically insulating, but thermally conductive material. Since during the charging and discharging processes, the thermal expansions of the material of the conduit 41 usually differs from the one of the material of the thermal storage element 3, a heat transfer material 7 is preferably used that dimensionally compensates for these differences in expansion, while keeping good bonding to at least one, better both, of the two materials. The heat transfer material 7, which advantageously has a negative thermal expansion coefficient, can for example be a thermal paste, powder or gel. It is possible for the heat transfer material 7 to harden during or immediately after production of the thermal energy storage unit 1. The heat transfer material 7 can for example be made of nitrides like AIN and SiN and carbides like SiC.

In the embodiment of figures 2a and 2b, a pump 9 is provided for conveying the fluid (water W or steam) into and through the conduit 41.

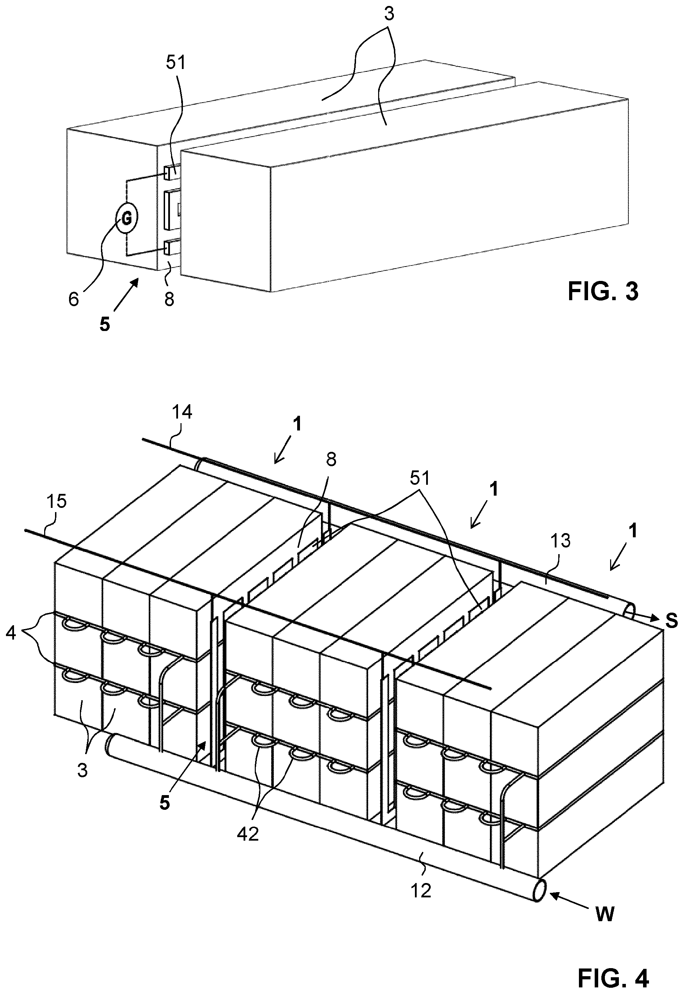

Figure 3 shows another embodiment of a thermal energy storage unit 1 as it can be used in an inventive energy storage device. Similar as in figure 1, the discharging part, i.e. the conduit 41, is not shown here. The resistive heater 51 of the present embodiment has a rectangular cross-section and is located between two cuboid thermal storage elements 3. The resistive heater 51 can be formed by a meander-shaped stripe as shown in figure 3. In other embodiments, the resistive heater 51 can also be formed by cylindrical elements such as pipes or wires or by elements of any other shape.

In figure 4, a particularly preferred embodiment of an arrangement of thermal energy storage units 1 as used in an inventive energy storage device is shown. In this embodiment, a plurality of cuboid thermal storage elements 3 stacked on each other are provided. Steam generation blocks 4 with conduits 41 for discharging the thermal energy by means of a fluid are arranged between the thermal storage elements 3. The plate-shaped steam generation blocks 4 comprise, in their inside, straight parallel conduits 41 that are interconnected at their respective ends by means of connection elements 42. For supplying the fluid, e.g. water W, to the steam generation blocks 4, a common supply tube 12 is provided, and for collecting the heated fluid, e.g. superheated steam S, from the steam generation blocks 4, a common collection tube 13 is provided. The steam generation blocks 4 can be connected in series to each other and/or, as it is shown in figure 4, in parallel to the supply tube 12 and the collection tube 13. An energy storage device according to the invention can or course comprise more or less thermal energy storage units 1 than are shown in figure 4, and there are many options to connect the individual thermal energy storage units 1 to each other both in series and in parallel as concerns the fluid streaming through the conduits 41.

Between each pair of stacks of thermal storage elements 3, a resistive heater 51 is arranged. The plurality of resistive heaters 51 are arranged in parallel and extend along vertical planes. In each case, the resistive heater 51 is formed by a meander-shaped stripe with flat surfaces and is surrounded by an electric insulation 8 in the form of a gas insulation. For supplying electric energy to the resistive heaters 51, a first electric energy bus 14 and a second electric energy bus 15 are provided. The resistive heaters 51 are connected in parallel to the first and the second electric energy bus 14, 15. Other embodiments of electrical heating devices 5 are of course possible. Instead of having first and second energy busses 14 and 15 that are connected by resistive heaters 51 as described, it would also be possible to provide e.g. a 3-phase or other connection.

The advantage of the embodiment of figure 4 is particularly the easy scalability and construction of the energy storage device. The construction is modular, such that the energy storage device can be adapted to any required storage capacity using the same type of elements.

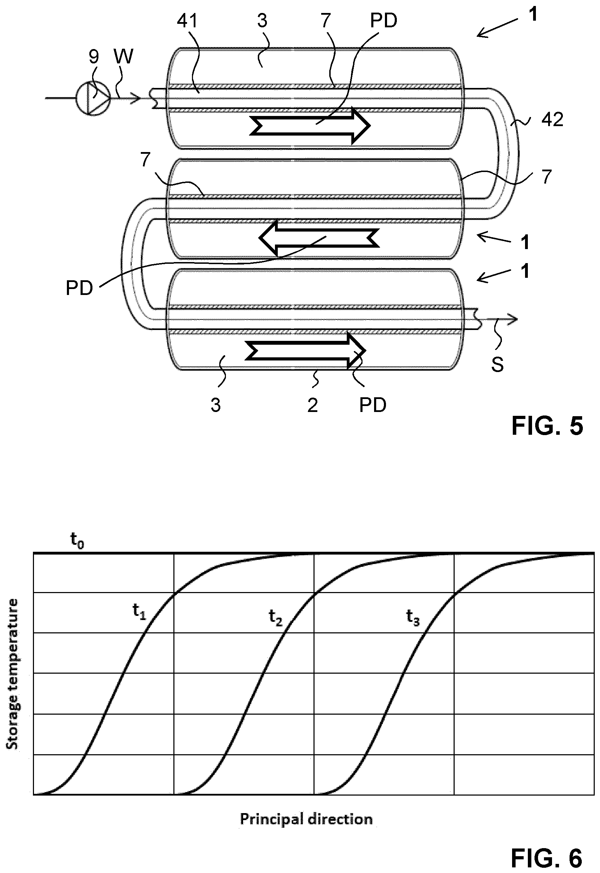

Figure 5 shows three single-pass thermal energy storage units 1 that are connected in series, e.g. for use in an inventive energy storage device. The advantage of the serial connection of a plurality of thermal energy storage units 1 is similar as the one of figures 2a and 2b, i.e. a gradient in the temperature distribution from the inlet to the outlet for controlling the outlet temperature of the steam S. Thus, similar as in the embodiment of figures 2a, 2b, a heat propagation along a principal heat propagation direction PD also evolves here, but not only for each of the individual thermal energy storage unit 1. Instead, the heat propagation extends over all serially connected thermal energy storage units 1. In the embodiment of figure 5, the thermal stresses are reduced due to a separation into three single-pass thermal energy storage units 1. The device of figure 5 also allows heating the thermal storage elements 3 of the different single-pass thermal energy storage units 1 to different temperatures during the charging process.

Thus, the design of a thermal energy storage unit 1 as a single-pass thermal energy storage unit 1 and/or the arrangement of a plurality of thermal energy storage units 1 in series allow for a discharge of thermal storage with temperature stratification. The temperature distribution along a principal heat propagation direction PD of an individual thermal storage element 3 or a plurality of serially connected thermal storage elements 3 is shown for different times during the discharging process in figure 6. At the start of discharge (t₀), the temperature is constant along or over the thermal storage element(s) 3, and during discharge, the temperature of the storage material near the inlet of the conduit 41 becomes significantly smaller than the one of the storage material near the outlet, i.e. there is a temperature stratification within the element along the principal direction PD. The temperature profile (average temperature in sections normal to flow direction) has a form of wave propagating along the direction of the flow. As can be noted in figure 6, the temperature at the outlet of the conduit 41 remains constant for all times t₀ to t₃, meaning that the steam S leaves the thermal storage element 3 at a constant temperature at all times t₀ to t₃.

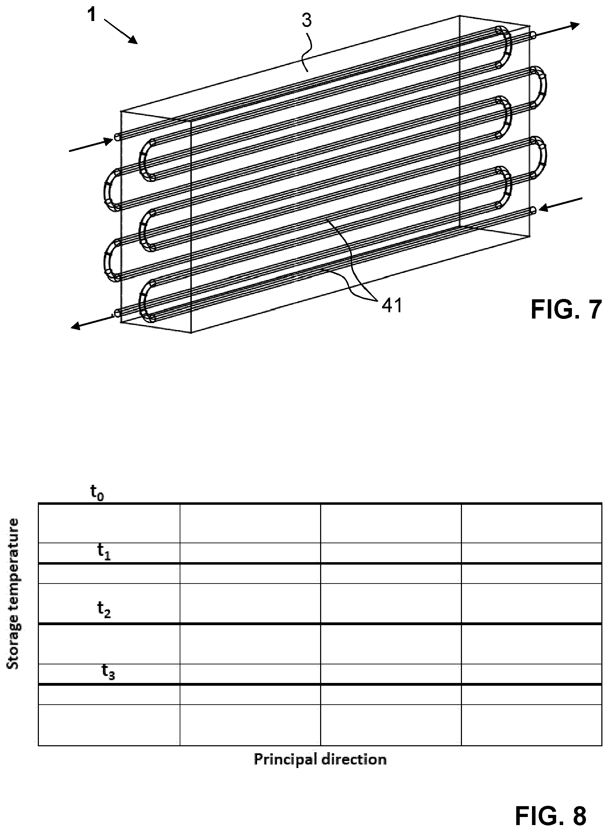

To obtain a thermal energy storage unit 1 with a homogeneous temperature distribution, the thermal energy storage unit 1 can have a plurality of straight conduits 41 that extend in parallel, but with opposite flow directions, i.e. with alternating inlet and outlets, as exemplary illustrated in figure 7. Curved connection elements 42 can be provided, in order to connect neighbouring inlets and outlets of the conduits 41, as shown in figure 7. Thus, two serpentine conduits 41 are provided, each of which has an inlet and an outlet. As a result, the temperature of thermal storage will change over time as shown in figure 8, i.e. it will essentially be homogeneous for the entire thermal storage element 3 and at all times t₀ to t₃.

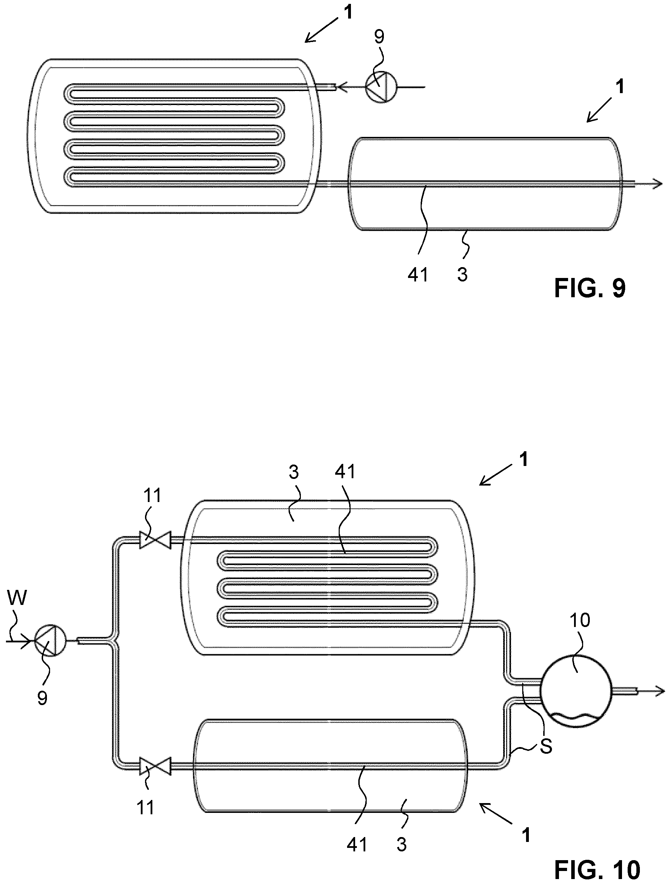

Thus, discharge with temperature stratification can be used for controlling the steam parameters. Discharge with homogeneous temperature distribution may have a particular advantage due to low temperature gradients within the thermal storage element 3. Particularly advantageous, however, is a combination of a plurality of such thermal storage elements 3, which can be of different or the same types, as is explained in the following with reference to figures 9 and 10.

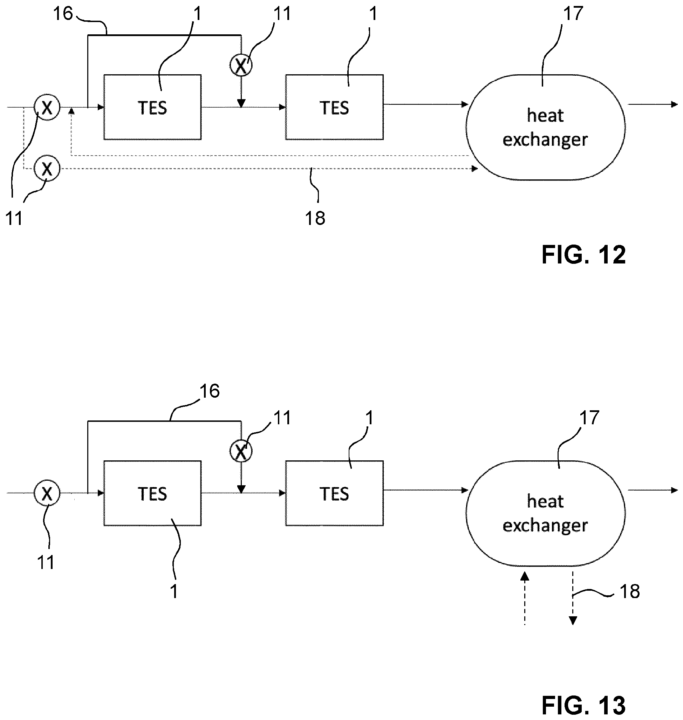

The energy storage devices as shown in figures 9 and 10 in each case comprise a first thermal energy storage unit 1 which is arranged in series (figure 9) or in parallel (figure 10) with/to a second thermal energy storage unit 1. In the embodiment of figure 9, a thermal energy storage unit 1 with homogeneous temperature distribution is connected in series to a thermal energy storage unit 1 with temperature stratification. In the embodiment of figure 12, a thermal energy storage unit 1 with homogeneous temperature distribution is connected in parallel to a thermal energy storage unit 1 with temperature stratification. In each case, the thermal energy storage unit 1 with homogeneous temperature distribution is realized by the exemplary provision of a multi-pass thermal energy storage unit 1, and the thermal energy storage unit 1 with temperature stratification is realized by the exemplary provision of a single-pass thermal energy storage unit 1.

In figure 9, the single-pass thermal energy storage unit 1 is arranged downstream of the multi-pass thermal energy storage unit 1. This embodiment combines the above-discussed advantages of the homogeneous temperature distribution, i.e. here of the multi-pass thermal energy storage unit 1, and of the temperature stratification, i.e. here of the single-pass thermal energy storage unit 1. The thermal storage elements 3 of the multi-pass thermal energy storage unit 1 and of the single-pass thermal energy storage unit 1 are preferably heated to differing temperatures during the charging process. The temperature of the multi-pass thermal energy storage unit 1 is preferably higher than the one of the single-pass thermal energy storage unit 1.

For example, the multi-pass thermal energy storage unit 1 shown in figure 9 can be charged to the maximal possible temperature of the respective solid material of its thermal storage element 3. The multi-pass thermal energy storage unit 1 is then used as a preheater and evaporator and during a certain time as a superheater as well. The single-pass thermal energy storage unit 1 can be charged to a temperature that equals the required temperature of the steam S, such as e.g. 550°C. The single-pass thermal energy storage unit 1 then has the function of a superheater and de-superheater at different time moments during discharge. In an initial stage of the discharging process, the multi-pass thermal energy storage unit 1 is fully charged and the output temperature of the steam at the outlet of the multi-pass thermal energy storage unit 1 can exceed the required temperature of the steam S. In this situation, this overheated steam will further charge the single-pass thermal energy storage unit 1 and will leave it at the required temperature. As soon as the temperature at the outlet of the multi-pass thermal energy storage unit 1 drops below the required temperature for the steam S, the single-pass thermal energy storage unit 1 starts to work as a superheater and maintains the required steam temperature.

Different thermal storage elements 3 can be made from different materials to optimise the overall costs of the energy storage device. In every case, the outlet element at the lowest temperature can e.g. be made from a cheaper material than the elements arranged upstream. It is also possible to e.g. arrange more than two elements (N elements) made from different materials and heated to different temperatures in a chain. The principal advantage of this storage method compared to other methods is that the temperature of the output steam S is self-controlled, i.e. no active control elements are required.

The pump 9 which maintains the required mass flow and pressure, is arranged on the cold side of the system. There is no need for hot valves and pumps or for any other expensive equipment on the hot end of the system.

In figure 10, a multi-pass thermal energy storage unit 1 is arranged in parallel to a single-pass thermal energy storage unit 1. Again, the two thermal energy storage units 1 are preferably heated to differing temperatures during the heating process. The advantage of the multi-pass thermal energy storage unit 1 is the combination of a high thermal capacity with a prolonged lifetime due to a homogeneous temperature distribution and less thermal stresses during the discharging process. The advantage of the single-pass thermal energy storage unit 1 is its temperature stability. By adjusting the mass flow of the streams of water W through the two thermal energy storage units 1, which is here done by means of valves 11 which are also arranged upstream of the thermal energy storage units 1, i.e. on the cold side of the system, the temperature of the steam S at the output of a steam collector 10 can be adjusted and controlled. Thus, a high thermal storage capacity is combined with a particularly well adjustable and controllable output temperature of the steam S. A single pump 9 is used here to convey both streams of water.

The serial and parallel arrangements of figures 9 and 10 can of course be combined with each other, in order to achieve both a constant and well adjustable output temperature of the steam S, before guiding the steam S to e.g. a steam turbine.

Figure 11 shows a schematic view of an energy storage device according to an inventive embodiment. A plurality of n thermal energy storage units 1 (TES_{1...n}) are connected in series, in order to achieve the advantage of temperature stratification and the resulting self-control of the steam output temperature, similar as in figures 5 and 9. One or more further thermal energy storage units 1 can be provided (see dashed lines in figure 11), which is/are connected in parallel to one or several of the serially connected thermal energy storage units 1, in order to e.g. improve the thermal capacity and the lifetime of the energy storage device. By means of a valve 11, the fluid may or may not be directed through the further thermal energy storage unit(s) 1 connected in parallel, as required. The individual thermal energy storage units 1 can be single-pass or multi-pass elements.

In order to dynamically adapt the thermal storage capacity of the energy storage device to the actual requirements and charging state, a bypass conduit 16 is provided which allows the fluid to bypass one or several of the serially connected thermal energy storage units 1, as required. Thus, for the discharge process, the fluid can be guided, by means of valves 11 provided in the bypass conduit 16, through a single thermal energy storage unit 1 (TESₙ) only or through any number of 2 to n serially connected thermal energy storage units 1 (TES₁ to TESₙ).

With an inventive energy storage device as shown in figure 11 it is possible to ensure, that even with a low charging energy, a sufficient temperature can be reached, in order to drive e.g. a steam turbine during the discharging process later on. On the other hand, if the charging energy is higher than usual, additional thermal energy storage units 1 can be activated if necessary by no longer bypassing them.

In an example, the most downstream thermal energy storage unit 1 (i.e. TESₙ in figure 11) is charged to the required superheat steam temperature (e.g. 550°C) and the remaining units (TES_{1...n-1}) are charged to the storage temperature (e.g. 700°C) and all the valves 11 are closed. For discharge:
- Step 1: The last valve 11 between TESₙ₋₁ and TESₙ is opened, and the fluid goes through TESₙ only until the required discharge level is achieved. During this phase, the outlet steam temperature shall remain within the required margin. Then, the respective valve 11 is closed.
- Step 2: The valve 11 between TESₙ₋₁ and TESₙ₋₂ is opened. The discharge of the system formed by TESₙ₋₁ and TESₙ starts. During this discharge phase, TESₙ₋₁ initially charged to a high temperature acts as the battery and TESₙ remaining at the required steam temperature acts as temperature controller, assuring that the outlet temperature is within the required margin. After discharge of TESₙ₋₁, the respective valve 11 is closed.
- Step 3: Step 2 is repeated successively for all units until TES₁.

Figure 12 shows another inventive embodiment with only two serially connected thermal energy storage units 1. The thermal energy storage unit 1 which is arranged the most upstream can by bypassed by means of a bypass conduit 16, if required. In order to avoid an overshoot of the outlet steam temperature, a heat exchanger 17 is here connected in series to the outlet of the second thermal energy storage element 1. The outlet steam is cooled within the heat exchanger 17 by means of the inlet fluid. By means of a valve 11, the inlet fluid can be rerouted through the heat exchanger 17 via a cooling conduit 18, if required. In this way, a particularly efficient control of the outlet steam temperature can be achieved.

Figure 13 shows another inventive embodiment with a heat exchanger 17. In contrast to the embodiment of figure 12, a different medium, i.e. a different fluid, is here to cool the outlet steam in the heat exchanger 17. Thus, the cooling circuit 18 is separate and independent of the one that goes through the thermal energy storage units 1.

Figure 14 shows an energy storage device according to another inventive embodiment, which has a fluid tank 19 for storing partially or fully heated fluid. Figure 14 shows only one of the thermal energy storage devices 1 connected in series, which is preferably the most downstream. Also not shown, but present, is the bypass conduit 16 (see figures 11-13). Thus, only a part of the entire energy storage device is shown in figure 14.

The fluid tank 19 is connected to the outlet of the thermal energy storage unit 1, in such a way that fluid, which streams through the thermal energy storage unit 1, can be redirected into the fluid tank 19 and collected there, if required. This can for example be done, if the temperature of the outlet fluid does not have the required temperature anymore, but can still be used e.g. for cogeneration via a cogeneration conduit 20 or to provide onsite power to a domestic hot water system, e.g. via a heat exchanger (not shown in figure 14). Alternatively or additionally, the fluid stored in the fluid tank 19 can also be fed back into one or more of the serially connected thermal energy storage units 1 via a feedback conduit 21, in order to e.g. support the start-up process of the energy storage device, such as to obtain steam at the required temperature within a shorter time period.

Figure 15 shows a possible embodiment of an electrical heating device 5 as it can be used in one or several thermal energy storage units 1 of an inventive energy storage device. The electrical heating device 5 comprises a ceramic tube 52. With its tubular shape, the ceramic tube 52 defines a main longitudinal center axis 54, around which a resistive heater 51 in the form of a wire is spirally wound. The wire, which is preferably heatable by means of electric current to 1000°C and more, can be arranged on the outer side of the ceramic tube 52, as shown in figure 15, but could basically also be arranged inside of the ceramic tube 52. The ceramic tube 52 serves as a holder for the wire. Towards the ends of the ceramic tube 52 and at the ends of the spirally wound wire, toroidal field shields 53 are provided. Each of the field shields 53 is attached to and surrounds the ceramic tube 52. The field shields 53 serve to avoid abrupt transitions of the electric fields at the ends of the ceramic tube 52. Intermediate field shields (not shown in figure 15) located at different positions along the ceramic tube 52 (i.e. between the two field shields 53 shown in figure 15) can also be provided. The role of the field shields is to smooth out local excessive electrical stresses caused by presence of sharp and/or low curvature radii elements (e.g. the wire itself), presence of triple points (the points where metal, ceramics and insulation gas come together).

**LIST OF REFERENCE SIGNS**

| | | | |
|---|---|---|---|
| 1 | Thermal energy storage unit | 10 | Steam collector |
| | | 11 | Valve |
| 2 | Housing | | |
| 3 | Thermal storage element | 12 | Supply tube |
| | | 13 | Collection tube |
| 4 | Steam generation block | | |
| 41 | Conduit | 14 | Electric energy bus |
| 42 | Connection elements | 15 | Electric energy bus |
| 5 | Electrical heating device | 16 | Bypass conduit |
| 51 | Resistive heater | 17 | Heat exchanger |
| 52 | Ceramic tube | 18 | Cooling conduit |
| 53 | Field shield | 19 | Fluid tank |
| 54 | Main longitudinal center axis | 20 | Cogeneration conduit |
| 6 | Electric energy supply | 21 | Feedback conduit |
| 7 | Heat transfer material | W | Water |
| | | S | Steam |
| 8 | Electric insulation | | |
| 81 | Spacer | PD | Principal heat propagation direction |
| 9 | Pump | | |

## Claims

1. Energy storage device comprising a plurality of thermal energy storage units (1) which each comprise
a thermal storage element (3) made of a solid material, for storing thermal energy; and
a conduit (41) which is adapted to guide a fluid (W, S) through or along the thermal storage element (3), in order to transfer thermal energy from the thermal storage element (3) to the fluid (W, S);
wherein at least two of the thermal energy storage units (1) are connected in series, such that the fluid (W, S) can be guided serially through the conduits (41) of these thermal energy storage units (1),
wherein a bypass conduit (16) is provided which allows the fluid (W, S) to bypass at least one thermal energy storage unit (1) of the at least two serially connected thermal energy storage units (1),
**characterized in that**
each of the thermal energy storage units comprises an electrical heating device (5) for heating the thermal storage element (3) by means of electric energy, which electrical heating device (5) comprises a ceramic tube (52) with a main longitudinal center axis (54) and an electric wire (51), which is spirally wound around the main longitudinal center axis (54) inside or outside of the ceramic tube (52) .

2. The energy storage device of claim 1, wherein the at least one thermal energy storage unit (1) which is allowed to be bypassed by the fluid (W, S) by means of the bypass conduit (16) is arranged upstream of at least another thermal energy storage unit (1) of the at least two serially connected thermal energy storage units (1).

3. The energy storage device of claim 1 or 2, wherein at least one thermal energy storage unit (1) is connected in parallel to at least one thermal energy storage unit (1) of the at least two serially connected thermal energy storage units (1).

4. The energy storage device as claimed in one of the preceding claims, comprising three or four serially connected thermal energy storage units (1), which can be bypassed by means of the bypass conduit (16) in such a way that, in the case of three serially connected thermal energy storage units (1), both one and two thermal energy storage units (1) can be bypassed as required, or, in the case of four serially connected thermal energy storage units (1), both one, two and three thermal energy storage units (1) can be bypassed as required.

5. The energy storage device as claimed in one of the preceding claims, additionally comprising a heat exchanger (17), which is arranged serially downstream of the at least two serially connected thermal energy storage units (1), and which serves to cool the fluid (W, S) that is output from the at least two serially connected thermal energy storage units (1).

6. The energy storage device of claim 5, wherein the heat exchanger (17) is adapted to cool the fluid (W, S) that is output from the at least two serially connected thermal energy storage units (1) by means of at least a part of the fluid (W, S) that is input to the at least two serially connected thermal energy storage units (1).

7. The energy storage device as claimed in one of the preceding claims, additionally comprising a fluid tank (19) for storing heated or partially heated fluid (W, S) that is output from one of the plurality of thermal energy storage units (1), in order to use the stored heated or partially heated fluid (W, S) for cogeneration and/or for inputting the stored heated fluid (W, S) to at least one of the plurality of thermal energy storage units (1).

8. The energy storage device as claimed in one of the preceding claims, additionally comprising a heat transfer material (7), which is arranged between the conduit (41) and the thermal storage element (3) of one or more of the plurality of thermal energy units (1), and which is adapted to dimensionally compensate for differential thermal expansions of the conduit (41) and the thermal storage element (3).

9. The device as claimed in one of the preceding claims, wherein a field shield (53) partially or completely surrounding the ceramic tube (52) is provided in the region of each end of the spirally wound electric wire (51).

10. Method for storing energy by means of an energy storage device, as claimed in one of the preceding claims, with a plurality of thermal energy storage units (1) each comprising a thermal storage element (3) made of a solid material, an electrical heating device (5) and a conduit (41) which is adapted to guide a fluid (W, S) through or along the thermal storage element (3), wherein at least a first thermal energy storage unit (1) and a second thermal energy storage unit (1) of the plurality of thermal energy storage units (1) are connected in series, and wherein each electrical heating device (5) comprises a ceramic tube (52) with a main longitudinal center axis (54) and an electric wire (51), which is spirally wound around the main longitudinal center axis (54) inside or outside of the ceramic tube (52), the method comprising the steps of
- heating the thermal storage element (3) of the second thermal energy storage unit (1) by means of electric energy; and
- guiding a fluid (W, S) through the conduit (41) of the second thermal energy storage unit (1), in order to transfer thermal energy from the thermal storage element (3) of the second thermal energy storage unit (1) to the fluid (W, S), while bypassing the first thermal energy storage unit (1) using a bypass conduit (16).

11. The method of claim 10, further comprising the steps of
- heating the thermal storage element (3) of the first thermal energy storage unit (1) by means of electric energy, when the thermal storage element of the second thermal energy storage unit (1) has reached a certain temperature; and
- closing the bypass conduit (16) and guiding the fluid (W, S) serially through the conduits (41) of the first and the second thermal energy storage units (1).

12. The method of claims 10 and 11, wherein the second thermal energy storage unit (1) is arranged downstream of the first thermal energy storage unit (1), wherein the energy storage device additionally comprises a heat exchanger (17), which is arranged serially downstream of the second thermal energy storage unit (1), and wherein the method further comprises the step of
- cooling the fluid (W, S) that is output from the second thermal energy storage unit (1) by means of the heat exchanger (17), when the thermal storage element (3) of the second thermal energy storage unit (1) exceeds a certain temperature.

## Patentansprüche

1. Energiespeichervorrichtung, aufweisend eine Vielzahl von thermischen Energiespeichereinheiten (1), welche jeweils aufweisen
ein Wärmespeicherelement (3), welches aus einem festen Material hergestellt ist, zum Speichern thermischer Energie; sowie
eine Leitung (41), welche dazu ausgebildet ist, ein Fluid (W, S) durch das Wärmespeicherelement (3) hindurch oder entlang des Wärmespeicherelements (3) zu leiten, um thermische Energie vom Wärmespeicherelement (3) auf das Fluid (W, S) zu übertragen;
wobei mindestens zwei der thermischen Energiespeichereinheiten (1) in Reihe geschaltet sind, so dass das Fluid (W, S) seriell durch die Leitungen (41) dieser thermischen Energiespeichereinheiten (1) geleitet werden kann,
wobei eine Bypassleitung (16) vorgesehen ist, welche es dem Fluid (W, S) ermöglicht, mindestens eine thermische Energiespeichereinheit (1) der mindestens zwei in Reihe geschalteten thermischen Energiespeichereinheiten (1) zu umgehen,
**dadurch gekennzeichnet, dass**
jede der Wärmespeichereinheiten eine elektrische Heizvorrichtung (5) zum Erwärmen des Wärmespeicherelements (3) mittels elektrischer Energie aufweist, wobei die elektrische Heizvorrichtung (5) ein Keramikrohr (52) mit einer Hauptlängsmittelachse (54) und einen elektrischen Draht (51) aufweist, welcher spiralförmig um die Hauptlängsmittelachse (54) innerhalb oder ausserhalb des Keramikrohrs (52) gewickelt ist.

2. Die Energiespeichervorrichtung nach Anspruch 1, wobei die mindestens eine thermische Energiespeichereinheit (1), welche mittels der Bypassleitung (16) von dem Fluid (W, S) umgangen werden kann, stromaufwärts von mindestens einer weiteren thermischen Energiespeichereinheit (1) der mindestens zwei in Reihe geschalteten thermischen Energiespeichereinheiten (1) angeordnet ist.

3. Die Energiespeichervorrichtung nach Anspruch 1 oder 2, wobei mindestens eine thermische Energiespeichereinheit (1) parallel zu mindestens einer thermischen Energiespeichereinheit (1) der mindestens zwei in Reihe geschalteten thermischen Energiespeichereinheit (1) geschaltet ist.

4. Die Energiespeichervorrichtung nach einem der vorstehenden Ansprüche, aufweisend drei oder vier in Reihe geschaltete thermische Energiespeichereinheiten (1), welche mittels der Bypassleitung (16) derart umgangen werden können, dass bei drei in Reihe geschalteten thermischen Energiespeichereinheiten (1) sowohl eine als auch zwei thermische Energiespeichereinheiten (1) nach Bedarf umgangen werden können, oder bei vier in Reihe geschalteten thermischen Energiespeichereinheiten (1) sowohl eine, zwei als auch drei thermische Energiespeichereinheiten (1) nach Bedarf umgangen werden können.

5. Die Energiespeichervorrichtung nach einem der vorstehenden Ansprüche, ausserdem aufweisend einen Wärmetauscher (17), welcher in Reihe stromabwärts zu den mindestens zwei in Reihe geschalteten thermischen Energiespeichereinheiten (1) angeordnet ist, und welcher dazu dient, das aus den mindestens zwei in Reihe geschalteten thermischen Energiespeichereinheiten (1) ausgegebene Fluid (W, S) zu kühlen.

6. Die Energiespeichervorrichtung nach Anspruch 5, wobei der Wärmetauscher (17) dazu ausgebildet ist, das aus den mindestens zwei in Reihe geschalteten thermischen Energiespeichereinheiten (1) ausgegebene Fluid (W, S) mittels mindestens eines Teils des zu den mindestens zwei in Reihe geschalteten thermischen Energiespeichereinheiten (1) zugeführten Fluids (W, S) zu kühlen.

7. Die Energiespeichervorrichtung nach einem der vorstehenden Ansprüche, ausserdem aufweisend einen Fluidtank (19) zum Speichern von erwärmtem oder teilweise erwärmtem Fluid (W, S), welches aus einer der Vielzahl von thermischen Energiespeichereinheiten (1) ausgegeben wird, um das gespeicherte erhitzte oder teilweise erhitzte Fluid (W, S) für die Kraft-Wärme-Kopplung und/oder für die Zufuhr des gespeicherten erhitzten Fluids (W, S) zu mindestens einer der Vielzahl von thermischen Energiespeichereinheiten (1) zu verwenden.

8. Die Energiespeichervorrichtung nach einem der vorstehenden Ansprüche, ausserdem aufweisend ein Wärmeübertragungsmaterial (7), welches zwischen der Leitung (41) und dem Wärmespeicherelement (3) einer oder mehrerer der Vielzahl von thermischen Energiespeichereinheiten (1) angeordnet ist und welches dazu ausgebildet ist, unterschiedliche Wärmeausdehnungen der Leitung (41) und des Wärmespeicherelements (3) dimensional zu kompensieren.

9. Die Vorrichtung nach einem der vorstehenden Ansprüche, wobei im Bereich jedes Endes des spiralförmig gewickelten elektrischen Drahtes (51) eine das Keramikrohr (52) teilweise oder vollständig umgebende Feldabschirmung (53) vorgesehen ist.

10. Verfahren zum Speichern von Energie mittels einer Energiespeichervorrichtung nach einem der vorstehenden Ansprüche, mit einer Vielzahl von thermischen Energiespeichereinheiten (1), welche jeweils ein aus einem festen Material hergestelltes Wärmespeicherelement (3), eine elektrische Heizvorrichtung (5) und eine Leitung (41) aufweisen, welche dazu ausgebildet ist, ein Fluid (W, S) durch das Wärmespeicherelement (3) hindurch oder entlang des Wärmespeicherelements (3) zu leiten, wobei mindestens eine erste thermische Energiespeichereinheit (1) und eine zweite thermische Energiespeichereinheit (1) von der Vielzahl der thermischen Energiespeichereinheiten (1) in Reihe geschaltet sind, und wobei jede elektrische Heizvorrichtung (5) ein Keramikrohr (52) mit einer Längsmittelachse (54) und einen elektrischen Draht (51) aufweist, welcher spiralförmig um die Längsmittelachse (54) innerhalb oder ausserhalb des Keramikrohrs (52) gewickelt ist, wobei das Verfahren die folgenden Schritte aufweist:
- Erwärmen des Wärmespeicherelements (3) der zweiten thermischen Energiespeichereinheit (1) mittels elektrischer Energie; sowie
- Leiten eines Fluids (W, S) durch die Leitung (41) der zweiten thermischen Energiespeichereinheit (1), um thermische Energie vom Wärmespeicherelement (3) der zweiten thermischen Energiespeichereinheit (1) auf das Fluid (W, S) zu übertragen, wobei die erste thermische Energiespeichereinheit (1) unter Verwendung einer Bypassleitung (16) umgangen wird.

11. Das Verfahren nach Anspruch 10, welches ausserdem die folgenden Schritte aufweist:
- Erwärmen des Wärmespeicherelements (3) der ersten thermischen Energiespeichereinheit (1) mittels elektrischer Energie, wenn das Wärmespeicherelement der zweiten thermischen Energiespeichereinheit (1) eine bestimmte Temperatur erreicht hat; sowie
- Schliessen der Bypassleitung (16) und serielle Leitung des Fluids (W, S) durch die Leitungen (41) der ersten und der zweiten thermischen Energiespeichereinheit (1).

12. Das Verfahren nach den Ansprüchen 10 und 11, wobei die zweite thermische Energiespeichereinheit (1) stromabwärts von der ersten thermischen Energiespeichereinheit (1) angeordnet ist, wobei die Energiespeichervorrichtung ausserdem einen Wärmetauscher (17) aufweisest, welcher stromabwärts von der zweiten thermischen Energiespeichereinheit (1) in Reihe angeordnet ist, und wobei das Verfahren zudem den Schritt aufweist:
- Kühlen des aus der zweiten thermischen Energiespeichereinheit (1) ausgegebenen Fluids (W, S) mittels des Wärmetauschers (17), wenn das Wärmespeicherelement (3) der zweiten thermischen Energiespeichereinheit (1) eine bestimmte Temperatur überschreitet.

## Revendications

1. Un dispositif de stockage d'énergie comprenant une pluralité d'unités de stockage d'énergie thermique (1) qui comprennent chacune
un élément de stockage thermique (3) constitué d'un matériau solide, destiné à stocker de l'énergie thermique ; et
une conduite (41) qui est adaptée pour guider un fluide (W, S) à travers ou le long de l'élément de stockage thermique (3), afin de transférer de l'énergie thermique de l'élément de stockage thermique (3) vers le fluide (W, S) ;
dans lequel au moins deux des unités de stockage d'énergie thermique (1) sont connectées en série, de telle sorte que le fluide (W, S) puisse être guidé en série à travers les conduites (41) de ces unités de stockage d'énergie thermique (1),
dans lequel une conduite de dérivation (16) est prévue, qui permet au fluide (W, S) de contourner au moins une unité de stockage d'énergie thermique (1) parmi les au moins deux unités de stockage d'énergie thermique (1) connectées en série,
**caractérisé en ce que**
chacune des unités de stockage d'énergie thermique comprend un dispositif de chauffage électrique (5) destiné à chauffer l'élément de stockage thermique (3) au moyen d'énergie électrique, lequel dispositif de chauffage électrique (5) comprend un tube en céramique (52) avec un axe central longitudinal principal (54) et un fil électrique (51), qui est enroulé en spirale autour de l'axe central longitudinal principal (54) à l'intérieur ou à l'extérieur du tube en céramique (52).

2. Le dispositif de stockage d'énergie selon la revendication 1, dans lequel l'au moins une unité de stockage d'énergie thermique (1) qui peut être contournée par le fluide (W, S) au moyen de la conduite de dérivation (16) est disposée en amont d'au moins une autre unité de stockage d'énergie thermique (1) parmi les au moins deux unités de stockage d'énergie thermique (1) connectées en série.

3. Le dispositif de stockage d'énergie selon la revendication 1 ou 2, dans lequel au moins une unité de stockage d'énergie thermique (1) est connectée en parallèle à au moins une unité de stockage d'énergie thermique (1) parmi les au moins deux unités de stockage d'énergie thermique (1) connectées en série.

4. Le dispositif de stockage d'énergie selon l'une des revendications précédentes, comprenant trois ou quatre unités de stockage d'énergie thermique (1) connectées en série, qui peuvent être contournées au moyen de la conduite de dérivation (16) de telle manière que, dans le cas de trois unités de stockage d'énergie thermique (1) connectées en série, une ou deux unités de stockage d'énergie thermique (1) puissent être contournées selon les besoins, ou, dans le cas de quatre unités de stockage d'énergie thermique (1) connectées en série, une, deux ou trois unités de stockage d'énergie thermique (1) puissent être contournées selon les besoins.

5. Le dispositif de stockage d'énergie selon l'une des revendications précédentes, comprenant en outre un échangeur de chaleur (17) qui est disposé en série en aval des au moins deux unités de stockage d'énergie thermique (1) connectées en série, et qui sert à refroidir le fluide (W, S) sortant des au moins deux unités de stockage d'énergie thermique (1) connectées en série.

6. Le dispositif de stockage d'énergie selon la revendication 5, dans lequel l'échangeur de chaleur (17) est adapté pour refroidir le fluide (W, S) qui est évacué des au moins deux unités de stockage d'énergie thermique (1) connectées en série au moyen d'au moins une partie du fluide (W, S) qui est introduit dans les au moins deux unités de stockage d'énergie thermique (1) connectées en série.

7. Le dispositif de stockage d'énergie selon l'une des revendications précédentes, comprenant en outre un réservoir de fluide (19) destiné à stocker le fluide chauffé ou partiellement chauffé (W, S) qui est évacué de l'une de la pluralité d'unités de stockage d'énergie thermique (1), afin d'utiliser le fluide chauffé ou partiellement chauffé stocké (W, S) pour la cogénération et/ou pour introduire le fluide chauffé stocké (W, S) dans au moins l'une de la pluralité d'unités de stockage d'énergie thermique (1).

8. Le dispositif de stockage d'énergie selon l'une des revendications précédentes, comprenant en outre un matériau de transfert thermique (7), qui est disposé entre la conduite (41) et l'élément de stockage thermique (3) d'une ou plusieurs de la pluralité d'unités d'énergie thermique (1), et qui est adapté pour compenser dimensionnellement les dilatations thermiques différentielles de la conduite (41) et de l'élément de stockage thermique (3).

9. Le dispositif selon l'une des revendications précédentes, dans lequel un écran de champ (53) entourant partiellement ou complètement le tube en céramique (52) est prévu dans la région de chaque extrémité du fil électrique enroulé en spirale (51).

10. Un procédé de stockage d'énergie au moyen d'un dispositif de stockage d'énergie, tel que revendiqué dans l'une des revendications précédentes, comprenant une pluralité d'unités de stockage d'énergie thermique (1) comprenant chacune un élément de stockage thermique (3) constitué d'un matériau solide, un dispositif de chauffage électrique (5) et une conduite (41) qui est adaptée pour guider un fluide (W, S) à travers ou le long de l'élément de stockage thermique (3), dans lequel au moins une première unité de stockage d'énergie thermique (1) et une deuxième unité de stockage d'énergie thermique (1) parmi la pluralité d'unités de stockage d'énergie thermique (1) sont connectées en série, et dans lequel chaque dispositif de chauffage électrique (5) comprend un tube en céramique (52) avec un axe central longitudinal principal (54) et un fil électrique (51), qui est enroulé en spirale autour de l'axe central longitudinal principal (54) à l'intérieur ou à l'extérieur du tube en céramique (52), le procédé comprenant les étapes consistant à
- chauffer l'élément de stockage thermique (3) de la deuxième unité de stockage d'énergie thermique (1) au moyen d'énergie électrique ; et
- guider un fluide (W, S) à travers la conduite (41) de la deuxième unité de stockage d'énergie thermique (1), afin de transférer de l'énergie thermique de l'élément de stockage thermique (3) de la deuxième unité de stockage d'énergie thermique (1) vers le fluide (W, S), tout en contournant la première unité de stockage d'énergie thermique (1) à l'aide d'une conduite de dérivation (16).

11. Le procédé selon la revendication 10, comprenant en outre les étapes consistant à
- chauffer l'élément de stockage thermique (3) de la première unité de stockage d'énergie thermique (1) au moyen d'énergie électrique, lorsque l'élément de stockage thermique de la deuxième unité de stockage d'énergie thermique (1) a atteint une certaine température ; et
- fermer la conduite de dérivation (16) et guider le fluide (W, S) en série à travers les conduites (41) des première et deuxième unités de stockage d'énergie thermique (1).

12. Le procédé selon les revendications 10 et 11, dans lequel la deuxième unité de stockage d'énergie thermique (1) est disposée en aval de la première unité de stockage d'énergie thermique (1), dans lequel le dispositif de stockage d'énergie comprend en outre un échangeur de chaleur (17), qui est disposé en série en aval de la deuxième unité de stockage d'énergie thermique (1), et dans lequel le procédé comprend en outre l'étape consistant à
- refroidir le fluide (W, S) sortant de la deuxième unité de stockage d'énergie thermique (1) au moyen de l'échangeur de chaleur (17), lorsque l'élément de stockage thermique (3) de la deuxième unité de stockage d'énergie thermique (1) dépasse une certaine température.
